Europäisches Patentamt

European Patent Office

Office européen des brevets

(11) Veröffentlichungsnummer: **0 489 449 A1**

# EUROPÄISCHE PATENTANMELDUNG

(21) Anmeldenummer: **91202855.2**

(22) Anmeldetag: **05.11.91**

(51) Int. Cl.⁵: C02F 3/20

(30) Priorität: **04.12.90 DE 4038581**

(43) Veröffentlichungstag der Anmeldung:
**10.06.92 Patentblatt 92/24**

(84) Benannte Vertragsstaaten:
**DE GB IT**

(71) Anmelder: **METALLGESELLSCHAFT Aktiengesellschaft**
**Reuterweg 14**
**W-6000 Frankfurt am Main(DE)**

(72) Erfinder: **Bröckl, Rudolf**
**Homburger Landstrasse 765**
**W-6000 Frankfurt am Main 56(DE)**

(54) **Verfahren zum Belüften von Abwasser.**

(57) In ein Abwasser enthaltendes Becken mit einer Abwasserhöhe von mindestens 10 m wird sauerstoffhaltiges Gas, verdichtet auf mindestens 2 bar, durch mindestens eine Leitung einem in der Nähe des Bodens des Beckens angeordneten Gas-Verteilersystem zugeführt. Das Verteilersystem besteht ganz oder weitgehend aus thermoplastischem Kunststoff. Um die Standfestigkeit des Verteilersystems zu sichern, wird in das verdichtete Gas verdüstes Wasser eingeleitet, wobei man die Temperatur des Gases auf unter 100°C absenkt. Die Leitung, durch die man das sauerstoffhaltige Gas zum Verteilersystem führt, kann ebenfalls ganz oder weitgehend aus thermoplastischem Kunststoff bestehen.

EP 0 489 449 A1

Die Erfindung betrifft ein Verfahren zum Einleiten von sauerstoffhaltigem Gas, insbesondere Luft, in ein Abwasser enthaltendes Becken mit einer Abwasserhöhe von mindestens 10 m.

Die Belüftung von Abwasser zum Durchführen des Belebungsverfahrens zum Reinigen des Abwassers ist bekannt und z.B. in Ullmanns Encyklopädie der technischen Chemie, 4. Auflage, Band 6, Seiten 431-433, beschrieben. Dabei kommen immer mehr auch große Wassertiefen bei Turm- oder Schachtbecken in Frage, um den Luftblasen einen längeren Steigweg anzubieten. Durch die längere Verweilzeit im Abwasser wird eine bessere Ausnutzung des Luftsauerstoffs erreicht.

Der Erfindung liegt die Aufgabe zugrunde, solche Anlagen möglichst kostengünstig bauen zu können und dabei auch die Betriebskosten niedrig zu halten. Erfindungsgemäß wird dies beim eingangs genannten Verfahren dadurch erreicht, daß man das sauerstoffhaltige Gas, verdichtet auf mindestens 2 bar, durch mindestens eine Leitung einem in der Nähe des Bodens des Beckens angeordneten Gas-Verteilersystem zuführt, von dem aus das Gas feinblasig in das Abwasser ausströmt, wobei das Verteilersystem ganz oder weitgehend aus thermoplastischem Kunststoff besteht, und daß man in das verdichtete Gas verdüstes Wasser einleitet, wobei man die Temperatur des Gases auf unter 100°C absenkt. Dadurch wird die für den Kunststoff konstruktiv erlaubte Temperatur mit Sicherheit unterschritten.

Als sauerstoffhaltiges Gas wird im allgemeinen Luft verwendet, doch kann man auch mit Sauerstoff angereicherte Luft oder evtl. technisch reinen Sauerstoff anwenden. Zur Vereinfachung wird nachfolgend nur noch von Luft gesprochen.

Die Luft wird beim Verdichten auf mindestens 2 bar und üblicherweise mindestens 4 bar erheblich erhitzt und erreicht Temperaturen von oberhalb 120°C. Bei diesen Temperaturen und Drücken müssen relativ teure Werkstoffe für die Leitungen und das Verteilersystem verwendet werden, wenn man ausreichende Haltbarkeit verlangt. Durch das Eindüsen von Wasser in die heiße Luft gelingt es aber, die Lufttemperatur durch verdampfendes und verdunstendes Wasser so weit abzusenken, daß nunmehr zumindest das Verteilersystem ganz oder weitgehend aus thermoplastischem Kunststoff und dadurch kostengünstig und dauerhaft hergestellt werden kann. Auch die Leitung von oben zum Verteilersystem kann ganz oder weitgehend aus thermoplastischem Kunststoff hergestellt sein.

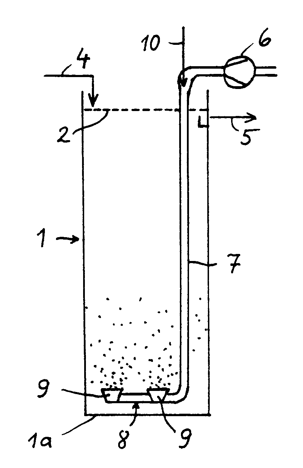

Einzelheiten des Verfahrens werden mit Hilfe der Zeichnung erläutert. Sie zeigt einen Längsschnitt durch ein Abwasserbehandlungsbecken.

Das Becken (1) weist eine nutzbare Innenhöhe vom Boden (1a) bis zum Wasserspiegel (2) von mindestens 10 m und vorzugsweise mindestens 15 m auf. Zu behandelndes Abwasser fließt durch die Leitung (4) zu, behandeltes Abwasser verläßt das Becken (1) in der Leitung (5). Die Belüftung des Abwassers erfolgt mit Hilfe eines Verdichters (6), der Luft ansaugt und sie nach unten durch die Leitung (7) zu einem Verteilersystem (8) fördert. Über zahlreiche Feinblasenbelüfter (9), die ebenfalls ganz oder weitgehend aus thermoplastischem Kunststoff hergestellt sind, tritt die Luft in das Abwasser ein und steigt feinblasig aufwärts.

In die verdichtete Luft wird am oberen Ende der Leitung (7) durch die Leitung (10) Wasser eingedüst, wobei man vorzugsweise entsalztes oder enthärtetes Wasser verwendet. Das verdüste Wasser verdampft und verdunstet in der Leitung (7) und im Verteilersystem (8), wobei die Temperatur der Luft auf unter 100°C abgesenkt wird. Vorzugsweise stellt man durch die Menge des verdüsten Wassers die Temperatur der Luft, die das Verteilersystem (8) erreicht, auf höchstens 90°C ein. Durch diese niedrigen Temperaturen ist es möglich, das Verteilersystem und die Leitung (7) ganz oder weitgehend aus thermoplastischem Kunststoff, z.B. PVC, Polyethylen oder Polypropylen, herzustellen. Diese Materialien verringern die Kosten der betreffenden Anlagenteile, wobei sie gleichzeitig eine lange Standzeit garantieren.

**Patentansprüche**

1. Verfahren zum Einleiten von sauerstoffhaltigem Gas, insbesondere Luft, in ein Abwasser enthaltendes Becken mit einer Abwasserhöhe von mindestens 10 m, dadurch gekennzeichnet, daß man das sauerstoffhaltige Gas, verdichtet auf mindestens 2 bar, durch mindestens eine Leitung einem in der Nähe des Bodens des Beckens angeordneten Gas-Verteilersystem zuführt, von dem aus das Gas feinblasig in das Abwasser ausströmt, wobei das Verteilersystem ganz oder weitgehend aus thermoplastischem Kunststoff besteht, und daß man in das verdichtete Gas verdüstes Wasser einleitet, wobei man die Temperatur des Gases auf unter 100°C absenkt.

2. Verfahren nach Anspruch 1, dadurch gekennzeichnet, daß man in das Gas entsalztes oder enthärtetes Wasser einleitet.

3. Verfahren nach Anspruch 1 oder 2, dadurch gekennzeichnet, daß die Leitung, durch die man das sauerstoffhaltige Gas zum Verteilersystem führt, ganz oder weitgehend aus thermoplastischem Kunststoff besteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WATER RESEARCH Bd. 18, Nr. 2, 1985, EXETER Seiten 257 - 264; CHONGRAK POLPRASERT ET AL: 'WASTE WATER TREATMENT IN A DEEP AERATION TANK' --- | | C02F3/20 |
| A | DE-B-1 153 725 (WOLFF) --- | | |
| A | PATENT ABSTRACTS OF JAPAN vol. 12, no. 155 (C-494)(3002) 12. Mai 1988 & JP-A-62 266 198 ( EBARA ) 18. November 1987 * Zusammenfassung * ----- | | |

**RECHERCHIERTE SACHGEBIETE (Int. Cl.5 )**

C02F

Der vorliegende Recherchenbericht wurde für alle Patentansprüche erstellt

| Recherchenort | Abschlußdatum der Recherche | Prüfer |
|---|---|---|
| DEN HAAG | 13 MAERZ 1992 | MEERTENS J. |